# EUROPEAN PATENT APPLICATION

(11) **EP 1 457 672 A1**
(43) Date of publication of application: **15.09.2004**
(21) Application number: 03447050.0
(22) Date of filing: 12.03.2003
(51) Int. Cl.: F03D 3/06

(54) **Vertical axis wind turbine**

(71) Applicant: Bachot, Arthur, 2940 Stabroek-Putte (BE)
(72) Inventor: Bachot, Arthur, 2940 Stabroek-Putte (BE)
(74) Representative: Luys, Marie-José A.H.

(57) **Abstract**

A wind turbine comprising a first rotor (1) which is rotatably mounted on a supporting structure, the first rotor (1) being fixed to a substantially vertical main shaft and comprising a plurality of rotor blades (13) for extracting energy from wind, the rotor blades (13) being rotatably mounted on the first rotor (1) about a vertical axis, the wind turbine further comprising a control mechanism (2,5) for positioning the rotor blades (13) in such a way with respect to the wind that the rotor blades (13) have a higher air resistance during a first half cycle of the rotation of the first rotor (1) with respect to during a second half cycle of the rotation of the first rotor (1), the control mechanism (2,5) comprising moving means (2) for pivoting the rotor blades (13) between a first position (A) in the first half cycle and a second position (B) in the second half cycle of the rotation of the first rotor.

## Description

The present invention relates to a wind turbine according to the preamble of the first claim.

A vertical axis wind turbine is for example known from EP-A-1 205 661 The wind turbine known from EP-A-1 205 661 comprises a rotor with a plurality of rotor arms, each carrying one or more rotor blades. The rotor blades are rotatably mounted on the rotor arms about a vertical axis. During a first half cycle of the rotor, the rotor blades are held in a position of higher air resistance with respect to the second half cycle of the rotor. To this end, the rotor arms are provided with stops for holding the rotor blades against the wind during the first half cycle of the rotation. During the second half cycle, the rotor blades are blown away from the stops into a free position. In other words, the position of the rotor blades is controlled passively, by the wind itself.

However, the wind turbine known from EP-A-1 205 661 has the disadvantage that the transition from the first to the second half cycle is sudden, since the rotor blades are rotated over about 180° in the point of transition. This is a result of the passive control and leads to undesirable stresses on the supporting structure.

A vertical axis wind turbine is also known from DE-A-42 16 493. Here, a control mechanism is provided for controlling the position of the rotor blades during the rotation of the rotor with respect to the wind in such a way, that the rotor blades have less air resistance during the first half cycle of the rotation with respect to the second half cycle. This control mechanism is constructed such that the rotor blades rotate at half the rotation speed of the rotor. To this end, the control mechanism comprises a number of gear wheels for coupling the rotation of the rotor with that of the rotor blades on the rotor at half speed.

The wind turbine known from DE-A-42 16 493 has the disadvantage that, due to the gear wheels, a lot of maintenance is required.

It is an aim of the present invention to provide a vertical axis wind turbine with an alternative control mechanism for controlling the position of the rotor blades with respect to the wind.

This aim is achieved according to the invention with a wind turbine showing the technical characteristics of the characterising part of the first claim.

The wind turbine of the invention comprises a first rotor which is rotatably mounted on a supporting structure. The first rotor is fixed to a substantially vertical main shaft and comprises a plurality of rotor blades for extracting energy from wind. The rotor blades are rotatably mounted on the first rotor about a substantially vertical axis. A control mechanism is provided for positioning the rotor blades in such a way with respect to the wind that the rotor blades have a higher air resistance during a first half cycle of the rotation of the first rotor with respect to a second half cycle of the rotation of the first rotor. This control mechanism comprises moving means for pivoting the rotor blades between a first position in the first half cycle and a second position in the second half cycle of the rotation of the first rotor. As a result of these moving means, the rotor blades are subjected to a controlled reciprocating pivotal movement between the first and second positions during the rotation of the first rotor. Due to this controlled movement, the position of the rotor blades with respect to the wind can be optimised actively, avoiding undesirable stresses on the supporting structure. Furthermore, the pivotal movement can be achieved without using gear wheels, so that the wind turbine of the invention is less liable to wear and its maintenance costs can be reduced.

The moving means for controlling the position of the rotor blades are preferably provided for pivoting the rotor blades in such a way that the darrieus effect occurs during the rotation of the first rotor. This darrieus effect is known in the art and relates to an effect where the rotor not only extracts wind energy due to the pressure force by the wind blowing onto its front side with respect to the wind, but also due to a suction force exerted on its back side with respect to the wind. The occurrence of this effect can highly enhance the efficiency of the wind turbine of the invention.

In a preferred embodiment of the wind turbine of the invention, the moving means are formed by a second rotor which is provided to rotate about a vertical axis at substantially the same speed as the first rotor, and which is eccentrically mounted with respect to the first rotor. Coupling means are provided for coupling the rotation of the first and second rotors, so that the two rotate at substantially the same speed. Each rotor blade has a first connection with the first rotor and a second connection with the second rotor, the first connection being spaced apart from the second connection in circumferential direction of the first rotor. In this way, the distance between the axis of the second rotor and the first connection of each rotor blade varies during the rotation, whereas the distance between the axis of the first rotor and the first connection remains the same. Because of this cyclic change in distance and the connection of the rotor blades to the second rotor in the second connections, which are spaced apart from the first connections, the rotor blades are subjected to a reciprocating pivotal movement during the rotation.

The coupling means for coupling the rotation of the rotors preferably comprise a first member which is fixed to the first rotor and a second member which is fixed to the second rotor, the first member being slidably connected to the second member.

Preferably, in the wind turbine of the invention, substantially each connection between parts which are provided to rotate or pivot with respect to each other is preferably formed by a bearing, preferably a ball bearing. This may reduce the wear of the wind turbine, so that maintenance costs can be reduced.

The second rotor preferably comprises a control disc on which a plurality of control arms are carried in bearings, each control arm forming a connection between the control disc and the second connection of the rotor blades.

The control mechanism preferably further comprises adjusting means for adjusting the movement of the rotor blades in response of a change in wind direction. These adjusting means are preferably formed by a connecting member which connects the second rotor eccentrically to the first rotor and a wind vane which is fixed to the connecting member. In this way, when the wind vane rotates in response to a change in wind direction, the connecting member is rotated over the same angle. As a result, the eccentric axis of the second rotor with respect to the first rotor is also rotated over the same angle, and the positions which are taken by the rotor blades are moved over this angle in circumferential direction of the first rotor. These adjusting means are passive, wind controlled means. Alternatively, the wind turbine may also comprise active adjusting means for adjusting the position of the rotor blades in response of a change in wind direction.

In a preferred embodiment, the wind turbine further comprises means for slowing down the rotation of the first rotor in cases of overspeed as a result of too high wind force. These means for slowing down the first rotor are preferably formed by at least one of the control arms which is constructed as an extendable arm of two telescopic members between which a compression spring is mounted. In this way, when the rotation speed becomes too high and large centrifugal forces are exerted on the rotor blades, the compression spring is compressed and the arm extends. As a result the rotor blade connected to this arm is no longer maintained in an optimised position with respect to the wind, so that less wind energy is extracted and the rotor slows down.

The invention will be further elucidated by means of the following description and the appended figures.

Figure 1 shows a top view of a preferred embodiment of the wind turbine of the invention.

Figure 2 shows a detailed, partly cross sectional side view of a preferred embodiment of the control mechanism of the wind turbine of figure 1.

Figure 3 shows a side view of the wind turbine of figure 1.

Figure 4 shows a preferred embodiment of the overspeed protection of the wind turbine of the invention.

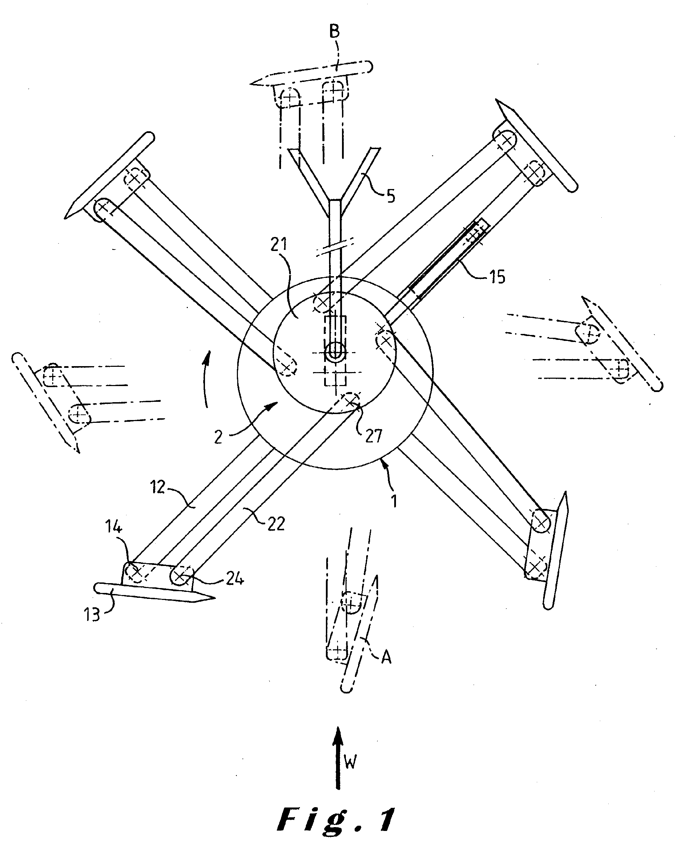

The wind turbine shown figures 1-3 comprises a first rotor 1 which is rotatably mounted on a supporting structure 3. The first rotor is fixed to a substantially vertical main shaft 11, which extends vertically through the supporting structure 3. A generator (not shown) is located on the ground and connected to the main shaft 11 for converting the rotation of the first rotor 1 into electrical energy. This generator may be asynchronous (variable rotation speed) or synchronous (fixed rotation speed).

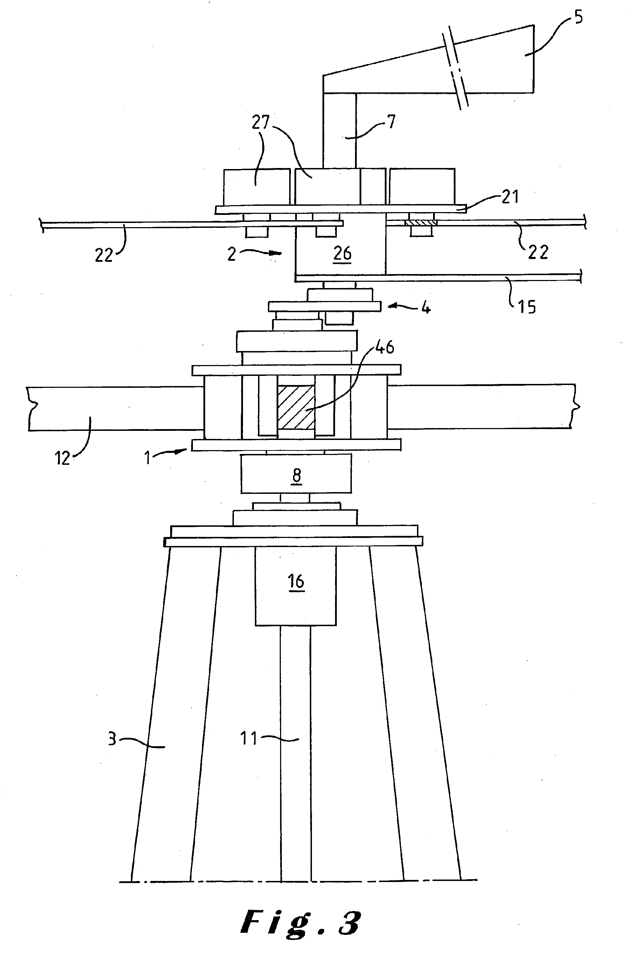

The first rotor 1 comprises a plurality of support arms 12, each of which carries a rotor blade 13 for extracting energy from wind. In the embodiment of figures 1 and 3, the wind turbine has four support arms 12 which each carry one rotor blade 13, but the wind turbine may also comprise more or less support arms and each arm may also carry more than one rotor blade. Each rotor blade 13 is rotatably connected to the support arm 12 in a first connection 14, by means of which the rotor blade 13 is rotatable with respect to the arm 12 about a substantially vertical axis. Each rotor blade 13 is further connected to a control arm 22 in a second rotatable connection 24. These control arms 24 form part of a second rotor 2, which forms a control mechanism for controlling the position of the rotor blades in such a way with respect to the wind that the rotor blades have a higher air resistance during a first half cycle of the rotation with respect to a second half cycle of the rotation. In figure 1, the rotor blades 13 have a higher air resistance in the left half cycle and a lower air resistance in the right half cycle, left and right being separated by the wind direction, which is shown by the "W"-arrow. In figure 1, a first position of the first rotor 1 is shown in full lines and a second, intermediate position is shown in dotted lines.

By means of the second rotor 2, the rotor blades 13 are pivoted between a first position A and a second position B during the rotation of the rotor 1. In the first position A, which is taken by the rotor blades 13 when they are in front of the main shaft 11 with respect to the wind W, the rotor blades 13 extend substantially radially, i.e. substantially parallel to the diameter of the first rotor 1. In the second position B, which is taken by the rotor blades 13 when they are behind the main shaft 11 with respect to the wind W, the rotor blades 13 extend substantially tangentially, i.e. substantially perpendicular to the diameter of the first rotor 1. During one rotation cycle, each rotor blade 13 is moved from the first position A to the second position B in the left half cycle and back to position A in the right half cycle. In other words, the rotor blades 13 are subjected to a controlled reciprocating pivotal movement between the first and second positions A and B during the rotation of the first rotor 1.

Due to this controlled movement, the position of the rotor blades 13 with respect to the wind can be optimised actively for extracting as much energy as possible from the wind. In figure 1 it is shown that the air resistance on the left hand side is higher than on the right hand side. This results from the movement of the rotor blades from the first position A to the second position B in the left half cycle, which places the rotor blades in a position in which they extend substantially perpendicular to the wind direction, so that their air resistance is relatively high. Due to the movement from the second position B to the first position A in the right half cycle, the rotor blades 13 are placed in a position in which they extend substantially parallel to the wind direction, so that their air resistance is relatively low. As a result, the rotation of the first rotor 1 in one direction, more particularly in clockwise direction in figure 1, is promoted, so that more energy can be extracted from the wind.

Experiments with the wind turbine shown in figures 1-3 have shown that the so-called darrieus effect occurs during the rotation of the first rotor 1. This darrieus effect is known in the art and relates to an effect where the rotor not only extracts wind energy due to the pressure force by the wind blowing onto its front side, but also due to a suction force exerted on its back side. The occurrence of this effect can highly enhance the efficiency of the wind turbine of figure 1.

Due to the active control of the position of the rotor blades 13, undesirable stresses on the supporting structure 3 can be avoided, since no sudden movements of the rotor blades 13 occur. Furthermore, the pivotal movement is achieved without the use of gear wheels, so that maintenance costs can be reduced.

In the wind turbine of figures 1-3, the pivotal movement of the rotor blades 13 from the first position A to the second position B and back is achieved by an eccentric mounting of the second rotor 2 with respect to the first rotor 1. Both rotors 1 and 2 are provided to rotate at substantially the same speed, which is achieved by coupling means 15, which couple the rotation of the first and second rotors. Due to the eccentric mounting, the distance between the rotation axis of the second rotor 2 and the first connection 14 of each rotor blade 13 varies during the rotation, whereas the distance between the axis 11 of the first rotor 1 and the first connection 14 remains the same. Because of this cyclic change in distance and the connection of the rotor blades 13 to the second rotor 2 in the second connections 24, which are spaced apart from the first connections 14, the rotor blades 13 are subjected to a reciprocating pivotal movement during the rotation.

The rotor blades 13 of the wind turbine of figures 1-3 have an aerodynamic shape corresponding to that of an aeroplane wing. Of course, the shape of the rotor blades 13 may be optimised depending on the circumstances. In the wind turbine of figures 1-3, the rotor blades 13 extend substantially straight in vertical direction. They may however also have a bent shape or any other shape known to the person skilled in the art. The darrieus effect can also be enhanced by a particular shape of the rotor blades 13.

The coupling means 15 for coupling the rotation of the rotors preferably comprise a first member which is fixed to the first rotor 1 and a second member which is fixed to the second rotor 2, the first member being slidably connected to the second member. This slidable connection makes it possible to couple the rotation of the rotors, taking the eccentric mounting into account.

The second rotor 2 of the wind turbine of figures 1-3 comprises a control disc 21 on which the plurality of control arms 22 are carried in ball bearings 27. Each control arm 24 forms a connection between the control disc 21 and the second connection 24 of the rotor blades 13.

The wind turbine of figures 1-3 further comprises adjusting means 4, 5 for adjusting the movement of the rotor blades 13 in response of a change in wind direction. These adjusting means are formed by a connecting member 4 which connects the second rotor 2 eccentrically to the first rotor 1 and a wind vane 5 which is fixed to the connecting member 4 by means of a shaft 7. This shaft 7 extends upwardly from the connecting member 4 and through the second rotor 2, which is rotatably mounted on this shaft 7. In this way, when the wind vane 5 rotates in response to a change in wind direction, the connecting member 4 is rotated over the same angle. As a result, the eccentric axis of the second rotor 2 with respect to the first rotor 1 is also rotated over the same angle, and the positions which are taken by the rotor blades are moved over this angle in circumferential direction of the first rotor.

In the wind turbine of figures 1-3, the wind vane 5 extends in line with the direction of eccentricity, i.e. the direction in which the axis of the second rotor 2 is displaced from the axis of the first rotor 1 or, in other words, the direction in which the connecting member extends. The direction of the wind vane 5 may however also differ from the direction of eccentricity. The angle between the two directions depends on the general construction of the wind turbine.

These wind vane 5 and the connecting member 4 are passive, wind controlled means for adjusting the positions of the rotor blades 13. Alternatively, the wind turbine may also comprise active adjusting means for adjusting the position of the rotor blades in response of a change in wind direction, which are for example controlled in response of wind direction detecting means.

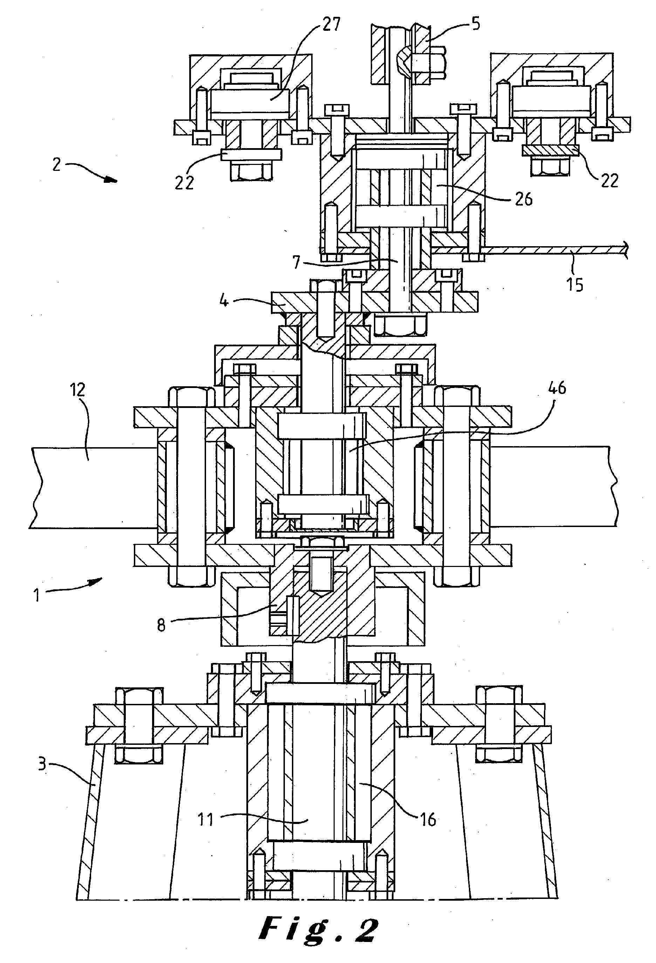

In the wind turbine of figures 1-3, substantially each connection between parts which are provided to rotate or pivot with respect to each other is formed by a bearing, preferably a ball bearing, or any other bearing known to the person skilled in the art. More particularly, figure 2 shows that the main shaft 11, on which the first rotor 1 is fixed, is mounted on the support structure 3 by means of a first bearing 16; the second rotor 2 is rotatable about the shaft 7 which connects the connecting member 4 and the wind vane 5 by means of a second bearing 26; the first connections 14 of the rotor blades 13 on the first rotor 1 are formed by third bearings 14; the second connections 24 of the rotor blades 14 on the second rotor 2 are formed by fourth bearings 24; the control arms 22 are connected to the control disc 21 by means of fifth bearings 27; and the connecting member 4 is mounted on top of the first rotor 1 by means of a sixth bearing 46. Due to the long life of such bearings, this may reduce the wear of the wind turbine, so that maintenance costs can be reduced.

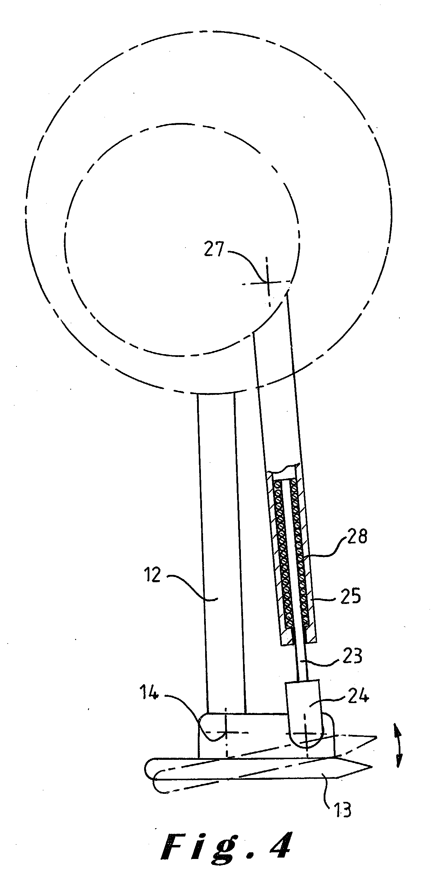

In the embodiment of figure 4, the wind turbine further comprises means for slowing down the rotation of the rotors 1 and 2 in cases of overspeed as a result of too high wind force. These means for slowing down the rotors are formed by at least one of the control arms 22, which is constructed as an extendable arm of two telescopic members 23 and 25 between which a compression spring 28 is mounted. In this way, when the rotation speed becomes too high and large centrifugal forces are exerted on the rotor blade 13, the compression spring 28 is compressed between the telescopic members 23, 25 and the arm 22 extends. As a result the rotor blade 13 connected to this arm 22 is no longer maintained in an optimised position with respect to the wind, so that less wind energy is extracted and the rotor 1 slows down. The rotor 1 is preferably further provided with a brake 8.

Alternatively, the rotation of the rotors 1 and 2 may also be slowed down by changing the direction of the wind vane 5 with respect to the direction of eccentricity, i.e. the direction of the connecting member 4, so that the wind vane 5 does no longer place the rotor blades 13 in their optimal positions. This change in direction of the wind vane 5 can for example be effected by incorporating a remote controlled motor (not shown) in the shaft 7, by means of which the wind vane 5 can be rotated with respect to the shaft 7 and the connecting member 4. This motor can for example be powered by means of photovoltaic cells (not shown), which may for example be mounted on the wind vane 5, in connection with a rechargeable battery (not shown). By means of the rotatability of the wind vane 5 with respect to the connecting member 4, the wind turbine may even be brought to standstill, when the forces on the rotor blades on the left and right hand sides of the wind turbine counteract each other.

### Reference list

- 1: first rotor
- 2: second rotor
- 3: support structure
- 4: connecting member
- 5: wind vane
- 7: shaft
- 8: brake
- 11: main shaft
- 12: support arm
- 13: rotor blade
- 14: first connection; third bearing
- 15: coupling means
- 16: first bearing
- 21: control disc
- 22: control arm
- 23: telescopic member
- 24: second connection; fourth bearing
- 25: telescopic member
- 26: second bearing
- 27: fifth bearing
- 28: compression spring
- 46: sixth bearing

## Claims

1. A wind turbine comprising a first rotor (1) which is rotatably mounted on a supporting structure (3), the first rotor (1) being fixed to a substantially vertical main shaft (11) and comprising a plurality of rotor blades (13) for extracting energy from wind, the rotor blades (13) being rotatably mounted on the first rotor (1) about a vertical axis, the wind turbine further comprising a control mechanism (2, 4, 5) for positioning the rotor blades (13) in such a way with respect to the wind that the rotor blades (13) have a higher air resistance during a first half cycle of the rotation of the first rotor (1) with respect to during a second half cycle of the rotation of the first rotor (1), **characterised in that** the control mechanism (2, 4, 5) comprises moving means (2) for pivoting the rotor blades (13) between a first position (A) in the first half cycle and a second position (B) in the second half cycle of the rotation of the first rotor.

2. The wind turbine of claim 1, **characterised in that** the moving means (2) are provided for pivoting the rotor blades (13) in such a way that the wind turbine extracts energy from wind due to pressure forces exerted by the wind on a front side of the rotor (1) with respect to the wind as well as due to suction forces exerted by the wind on a back side of the rotor (1) with respect to the wind.

3. The wind turbine of claim 1 or 2, **characterised in that** the moving means are formed by a second rotor (2) which is provided to rotate about a vertical axis at substantially the same speed as the first rotor (1), the second rotor being eccentrically mounted with respect to the first rotor, each rotor blade (13) having a first connection (14) with the first rotor (1) and a second connection (24) with the second rotor (2), the first connection being (14) spaced apart from the second connection (24) in circumferential direction of the first rotor (1), the wind turbine further comprising coupling means (15) for coupling the rotation of the first and second rotors.

4. The wind turbine of claim 3, **characterised in that** the first rotor (1) is carried in a first bearing (16), the second rotor is carried in a second bearing (26), the first connections (14) between the rotor blades (13) and the first rotor (1) are formed by third bearings (14) and the second connections (24) between the rotor blades (13) and the second rotor (2) are formed by fourth bearings (24).

5. The wind turbine of claim 3 or 4, **characterised in that** the coupling means (15) comprise a first member which is fixed to the first rotor and a second member which is fixed to the second rotor, the first member being slidably connected to the second member.

6. The wind turbine of any one of the claims 3- 5, **characterised in that** the second rotor (2) comprises a control disc (21) on which a plurality of control arms (22) are carried in fifth bearings (27), each control arm (22) forming a connection between the control disc (21) and the second connection (24) of the rotor blades (13).

7. The wind turbine of any one of the previous claims, **characterised in that** the control mechanism further comprises adjusting means (4, 5) for adjusting the positions of the rotor blades in response of a change in wind direction.

8. The wind turbine of claim 7, **characterised in that** the adjusting means are formed by a connecting member (4) which connects the second rotor (2) eccentrically to the first rotor (1) and a wind vane (5) which is fixed to the connecting member (4).

9. The wind turbine of any one of the previous claims, **characterised in that** the wind turbine further comprises means (23, 25, 28) for slowing down the rotation of the first rotor in cases of overspeed as a result of too high wind force.

10. The wind turbine of claim 9, **characterised in that** the means for slowing down the rotation are formed by at least one of the control arms (22) which is constructed as an extendable arm of two telescopic members (23, 25) between which a compression spring (28) is mounted.
